# EUROPÄISCHE PATENTSCHRIFT

(11) **EP 3 499 241 B1**
(45) Veröffentlichungstag und Bekanntmachung des Hinweises auf die Patenterteilung: **17.06.2020**
(21) Anmeldenummer: 17208026.9
(22) Anmeldetag: 18.12.2017
(51) Int. Cl.: G01N 35/00, G01N 35/04, G01N 35/10

(54) **GREIFER MIT MINDESTENS EINEN SAUGNAPF**
GRIPPER WITH AT LEAST ONE VACUUM CUP
POIGNÉE AVEC AU MOINS UNE VENTOUSE

(43) Veröffentlichungstag der Anmeldung: 19.06.2019
(73) Patentinhaber: TECAN TRADING AG, 8708 Männedorf (CH)
(72) Erfinder: Cors, Nicolas, 8640 Rapperswil (CH); Kuster, Martin, 8733 Eschenbach (CH)
(74) Vertreter: OK pat AG

(56) Entgegenhaltungen:
- WO-A2-2009/033128
- US-B1- 6 739 448

## Beschreibung

### TECHNISCHES GEBIET

Die vorliegende Erfindung betrifft einen Greifer für Mikroplatten, Deckel und andere Laborartikel, insbesondere einen Sauggreifer einer Pipettiereinheit.

### STAND DER TECHNIK

Aus dem Stand der Technik sind Greifer bekannt, mit welchen Laborartikel mit Greiffingern oder Paddel seitlich geklemmt werden können. Jeweils ein solcher Greifer kann an einem Pipettier-Rohr eines Handling-Arms einer Pipettiereinheit angeordnet werden.

Um die Laborartikel fest und sicher greifen zu können, sind grosse seitliche Klemmkräfte erforderlich, welche zu einer verstärkten Abnützung der Mechanik des Handling-Arms führen.

Alternativ sind Greifer bekannt, bei welchen die Laborartikel nicht seitlich geklemmt werden, sondern von unten gehalten werden. Hierfür benötigen die Greiffinger oder Paddel jedoch einen Zugang zur Unterseite der Laborartikel. Um diesen Zugang zu ermöglichen ist eine Anpassung der Laborartikel erforderlich, beispielsweise durch die Ausbildung von Ausnehmungen an der Unterseite der Seitenwände der Laborartikel und/oder es ist eine Anpassung der Übernahmepositionen erforderlich. Um die Erfindung in der richtigen Perspektive zu sehen, wird auf die Druckschriften WO2009/033128 A2 und US 6 739 448 B1 verwiesen.

### BESCHREIBUNG DER ERFINDUNG

Eine Aufgabe der vorliegenden Erfindung besteht darin, einen Greifer für eine Pipettiereinheit bereitzustellen, bei welchem die oben aufgeführten Nachteile vermieden werden.

Diese Aufgabe wird durch einen Greifer mit den Merkmalen des Anspruchs 1 gelöst. Weitere Ausführungsformen des Greifers, sowie eines Pipettier-Systems sind durch die Merkmale von weiteren Ansprüchen definiert.

Ein erfindungsgemässer Greifer umfasst eine mechanische Kupplung, mit welcher der Greifer an ein Pipettier-Rohr anschliessbar ist, mindestens einen Fluidkanal, welcher sich von der der Kupplung aus erstreckt und mit welchem ein Unterdruck übertragbar ist. Der Greifer umfasst mindestens einen Saugnapf, welcher durch den mindestens einen Fluidkanal mit der Kupplung verbunden ist, wodurch der Unterdruck von der Kupplung zum mindestens einen Saugnapf übertragbar ist. Der mindestens eine Saugnapf ist derart ausgerichtet, dass ein Rand einer Saugglocke des mindestens einen Saugnapfes, in der bestimmungsgemässen Gebrauchslage des Greifers, in einer im Wesentlichen vertikalen Ebene ausgerichtet ist. Dieses Design hat den Vorteil, dass Laborartikel seitlich mit dem mindestens einen Saugnapf gehalten werden können. Der Saugnapf kann beispielsweise an einer ebenen oder leicht gekrümmten Seitenwand eines Laborartikels angesetzt werden. Eine spezielle Ausgestaltung der Laborartikel, beispielsweise mit einer Greiferaufnahme, ist daher unnötig. Die Ausrichtung der Ränder der Saugnäpfe in einer im Wesentlichen vertikalen Ebene schliesst gewisse Abweichungen aus der Vertikalen nicht aus. Es sind Abweichungen von bis zu plus oder minus 45° aus der Vertikalen realisierbar. Ein seitliches Greifen eines Laborartikels ist damit immer noch möglich.

In einer Ausführungsform umfasst der Fluidkanal mindestens einen ersten Abschnitt, welcher sich in der bestimmungsgemässen Gebrauchslage des Greifers, in einer im Wesentlichen vertikalen Ebene erstreckt. Der Fluidkanal umfasst ein Bauteil, wie beispielsweise ein Rohr oder ein anderer länglicher Hohlkörper, in welchem eine Durchgangsöffnung vorgesehen ist. Die Durchgangsöffnung kann sich geradlinig, winklig oder gekrümmt innerhalb des Bauteils erstrecken. Eine geradlinige Durchgangsöffnung kann beispielsweise eine Durchgangsbohrung sein und eine winklige, kann mehrere Bohrungen oder Durchgangsbohrungen umfassen, welche sich zumindest teilweise überschneiden, wobei gewisse Öffnungen der Bohrungen verschlossen werden können, um eine winklige Kanalführung zu erzeugen. Alternativ kann sich der erste Abschnitt im Wesentlichen horizontal von der Kupplung an erstrecken.

In einer Ausführungsform erstreckt sich der mindestens eine erste Abschnitt im Wesentlichen in der Richtung einer Vertikalachse und/oder der mindestens eine erste Abschnitt erstreckt sich geneigt bezüglich der Vertikalachse. Der ersten Abschnitt erstreckt sich im Wesentlichen in der gleichen Richtung wie das Pipettier-Rohr, an welchem er mit der Kupplung angeordnet ist. Dies erlaubt eine einfache Konstruktion. Eine geneigte Ausführungsform kann beispielsweise bei mehreren nebeneinander angeordneten Saugnäpfen vorteilhaft sein, da zwischen den einzelnen Saugnäpfen keine direkte Verbindung mit einem geradlinigen Fluidkanal besteht, welcher mit Objekten im Bereich einer Laborartikelaufnahme kollidieren könnte.

In einer Ausführungsform umfasst der Fluidkanal mindestens einen zweiten Abschnitt, welcher sich in der bestimmungsgemässen Gebrauchslage des Greifers, in einer im Wesentlichen horizontalen Ebene erstreckt. Diese Konstruktion erlaubt eine horizontal versetzte Anordnung der Saugnäpfe bezüglich der Kupplung und somit bezüglich des Pipettier-Rohres. Ebenfalls können mehrere Saugnäpfe entlang eines horizontalen Abschnittes angeordnet werden.

In einer Ausführungsform umfasst der zweite Abschnitt einen inneren Abschnitt, welcher sich im Wesentlichen in einer ersten horizontalen Richtung erstreckt und einen äusseren Abschnitt, welcher sich im Wesentlichen in einer zweiten horizontalen Richtung erstreckt. Damit kann eine horizontal versetze Anordnung der Saugnäpfe in zwei horizontalen Richtungen bezüglich der Kupplung realisiert werden. In der bestimmungsgemässen Gebrauchslage erstreckt sich das Pipettier-Rohr im Wesentlichen in einer senkrechten Richtung. Mit einer geeigneten Kombination von vertikalen und horizontalen Abschnitten lassen sich die Saugnäpfe beliebig bezüglich des Pipettier-Rohres anordnen und ausrichten.

In einer Ausführungsform ist der äussere Abschnitt im Wesentlichen senkrecht zum inneren Abschnitt ausgerichtet. Dadurch ist ein paralleler Versatz des Saugnapfes bezüglich der Kupplung realisierbar.

In einer Ausführungsform sind die Abschnitte des Fluidkanals gerade oder gekrümmt ausgebildet. Gerade Abschnitte können mi Bohrungen realisiert werden und gekrümmte, beispielsweise mit gekrümmten Rohren. Eine Kombination von geraden und gekrümmten Abschnitten ist ebenfalls möglich. Selbstverständlich kann der Greifer zumindest teilweise aus Spritzgussteilen bestehen, beispielsweise aus Kunststoff oder Metall. Alternativ kann der Greifer zumindest teilweise durch einen 3D-Drucker, durch Laser-Sintern oder durch andere additive Herstellungsverfahren erzeugt werden.

In einer Ausführungsform umfasst der Greifer zwei oder mehr Saugnäpfe. Mit mehreren Saugnäpfen kann bei einem Gleichen Unterdruck, welcher an den Saugnäpfen wirkt, die totale resultierende Haltekraft erhöht werden. Mit zwei und mehr Saugnäpfen können zudem höhere Kippkräfte aufgenommen werden, welche entstehen können, wenn die Saugnäpfe nicht genau im Schwerpunkt des Laborartikels angreifen können.

In einer Ausführungsform sind mindestens zwei der Saugnäpfe in einer gemeinsamen horizontalen Ebene angeordnet. Alternativ können die Saugnäpfe in zueinander parallelen horizontalen Ebenen angeordnet sein. Die versetzte Anordnung erlaubt eine kompaktere Anordnung von mehreren Saugnäpfen in einem engeren Raum.

In einer Ausführungsform sind die Ränder der Saugnäpfe parallel oder winklig zueinander ausgerichtet. Dies erleichtert beispielsweise das Greifen von Laborartikel mit gewölbten Oberflächen. Die Saugnäpfe können einander zugewandt sein, wenn beispielsweise eine Petrischale mit dem Greifer gefasst werden soll. Die Saugnäpfe sind dann gegen eine gemeinsame Mittelachse gerichtet, bzw. sind winklig zur gemeinsamen Mittelachse ausgerichtet. Die Saugnäpfe können parallel oder unter einem Winkel von bis zu 90° zueinander ausgerichtet sein.

In einer Ausführungsform sind die Saugnäpfe in regelmässigen Abständen zueinander angeordnet. Alternativ können die Saugnäpfe unregelmässig zueinander angeordnet und ausgerichtet sein.

In einer Ausführungsform ist jeder Saugnapf mit einem einschraubbaren Halter am Fluidkanal befestigbar. Dies erleichtert das Montieren oder Auswechseln der Saugnäpfe.

In einer Ausführungsform sind die seitlichen Aussenabmessungen eines oberen freien Endes des Körpers der Kupplung grösser als die seitlichen Abmessungen des ersten Abschnitts des Fluidkanals. Diese Bauweise stellt einen robusten und stabilen Kupplungsbereich und einen schlanken Bereich des Fluidkanals bereit.

In einer Ausführungsform ist in der oberen stirnseitigen Fläche der Kupplung eine erste Ausnehmung vorgesehen, welche sich entlang der vertikalen Achse erstreckt und in welcher das Pipettier-Rohr aufnehmbar und fixierbar ist. Die innere Kontur der Ausnehmung entspricht im Wesentlichen der Aussenkontur des aufzunehmenden Pipettier-Rohres, wobei im Kontaktbereich genügend Spiel vorgesehen ist, dass der Greifer mit vernünftigem Kraftaufwand am Pipettier-Rohr angeordnet werden kann.

In einer Ausführungsform umfasst die Ausnehmung einen zylindrischen ersten Abschnitt, einen konisch nach unten zusammenlaufenden zweiten Abschnitt und einen zylindrischen dritten Abschnitt, wobei der Durchmesser des dritten Abschnitts kleiner als der Durchmesser des ersten Abschnitts ist. Alternativ kann die Ausnehmung einen zylindrischen und/oder einen konisch zusammenlaufenden Abschnitt umfassen. Es ist auch möglich, dass die Ausnehmung mehrere zueinander abgestufte zylindrische Abschnitte umfasst.

In einer Ausführungsform ist am oberen freien Ende der Kupplung eine erste Kraftscheibe zwischen dem Körper und einem axialen Führungsring klemmbar angeordnet, wobei die innere Kontur der ersten Kraftscheibe im geklemmten Zustand in das Innere der Kontur der ersten Ausnehmung ragt. Die erste Kraftscheibe ist aus einem elastischen Material, beispielsweise aus einem elastischen Kunststoff, wie beispielsweise Gummi oder Silikon. Mit der Kraftscheibe kann der Greifer am Pipettier-Rohr zentriert, geklemmt und ausgerichtet werden. Zusätzlich kann damit der Spalt zwischen dem Greifer und dem Pipettier-Rohr abgedichtet werden.

In einer Ausführungsform ist am oberen freien Ende der Kupplung mindestens eine zweite Ausnehmung vorgesehen, welche sich von der ersten Ausnehmung radial nach aussen erstreckt und in welcher eine zweite Erhöhung des Pipettier-Rohres aufnehmbar ist, wodurch eine relative Verdrehung des Greifers bezüglich des Pipettier-Rohres verhindert werden kann. Alternativ kann die Innenkontur der Ausnehmung derart ausgebildet sein, dass sie mit der Aussenkontur des Pipettier-Rohres einen Formschluss bilden kann. Es können auch mehrere solcher zweiten Ausnehmungen vorgesehen sein, welche gleichmässig oder ungleichmässig verteilt am Umfang der ersten Ausnehmung angeordnet sind.

In einer Ausführungsform ist am unteren Ende des dritten Abschnitts der ersten Ausnehmung eine umlaufende erste Nut vorgesehen, in welcher eine ringscheiben-förmige erste Dichtung angeordnet ist, deren innere Kontur in das Innere der Kontur des dritten Abschnitts ragt. Die stirnseitig gegenüber dem Pipettier-Rohr angeordnete Dichtung dichtet nicht nur, sondern sie bildet gleichzeitig einen Anschlag für das Pipettier-Rohr, welcher nicht hart ist, wodurch eine Beschädigung des Pipettier-Rohres verhinderbar ist.

In einer Ausführungsform ist im dritten Abschnitt der ersten Ausnehmung eine umlaufende zweite Nut vorgesehen, in welcher eine ringförmige zweite Dichtung angeordnet ist, deren innere Kontur in das Innere der Kontur des dritten Abschnitts ragt. Beispielsweise ist ein O-Ring oder eine Lippendichtung vorgesehen. Die zweite Dichtung zentriert und dichtet ebenfalls.

In einer Ausführungsform ist im ersten Abschnitt der ersten Ausnehmung eine umlaufende dritte Nut vorgesehen, in welcher eine ringförmige dritte Dichtung, oder in welcher eine ringförmige dritte Dichtung und eine zweite Kraftscheibe angeordnet sind, wobei die innere Kontur der dritten Dichtung in das Innere der Kontur des ersten Abschnitts ragt. Die dritte Dichtung kann ebenfalls ein O-Ring oder eine Lippendichtung sein. Die zweite Kraftscheibe kann aus Kunststoff oder aus Metall gefertigt sein. Mit der Kraftscheibe kann eine radial nach innen gerichtete Kraft auf die dritte Dichtung ausgeübt werden. Diese Bauweise reduziert das Steifigkeitsverhalten der dritten Dichtung bei einer Kraftbeaufschlagung auf die Innenseite der dritten Dichtung, da die Kraftscheibe nachgiebiger ist im Vergleich zum Greifermaterial im Bereich der Kupplung.

In einer Ausführungsform ist im ersten Abschnitt der ersten Ausnehmung eine umlaufende vierte Nut vorgesehen, in welcher ein ringförmiges, elastisches Kupplungselement angeordnet, dessen innere Kontur in das Innere der Kontur des ersten Abschnitts ragt. Beispielsweise ist das Kupplungselement eine torusförmige Feder. Das Kupplungselement kann eine Dichtung umfassen, beispielsweise in der Form einer zumindest teilweisen Kunststoffummantelung. Das Kupplungselement kann auch vollständig von Kunststoff umgeben sein.

In einer Ausführungsform ist in der Kupplung mindestens eine radiale Bohrung vorgesehen, welche sich von der vierten Nut radial nach aussen erstreckt und in welcher ein Drücker angeordnet ist, mit welchem eine radial nach innen gerichtete Kraft auf das Kupplungselement ausübbar ist. Mit mehreren Drückern kann eine am Umfang gleichmässiger verteilt äussere Krafteinwirkung auf das Kupplungselement erzeugt werden. Zudem erhöht sich die Gesamtkraft. Somit kann eine präzise Einstellung der Kraft vorgenommen werden, welche für die Anordnung des Greifers am Pipettier-Rohr erforderlich ist.

Die erwähnten Ausführungsformen des Greifers lassen sich beliebig miteinander kombinieren, sofern sie sich nicht widersprechen.

Ein erfindungsgemässes Pipettier-System umfasst eine Pipettier-Vorrichtung mit einer Unterdruckquelle und mit mindestens einem Pipettier-Rohr, welches mit der Unterdruckquelle verbundenen ist, wobei das Pipettier-System weiter mindestens einen Greifer gemäss einer der vorangegangenen Ausführungsformen umfasst, welcher mit der Kupplung am Pipettier-Rohr fixiert werden kann. Beispielsweise kann an einem Pipettier-Rohr jeweils ein Greifer angeordnet sein. Es können jedoch auch mehrere Pipettier-Rohre mit einem gemeinsamen Greifer verbunden sein.

Ein Pipettier-System kann mehrere Pipettier-Rohre umfassen, wobei jedes der Pipettier-Rohre seitlich in einer ersten horizontalen X-Richtung und in einer zweiten horizontalen Y-Richtung und in einer senkrechten Z-Richtung verfahrbar ist. Alternativ können mehrere Pipettier-Rohre auf einem gemeinsamen Schlitten angeordnet sein. Beispielsweise können die Rohre gemeinsam in der X-Richtung verfahren werden und die Rohre können separat in der Y-Richtung bezüglich des Schlittens verfahren werden. Beispielsweise können die Abstände zwischen den Pipettier-Rohren bei der Bewegung in der Y-Richtung immer gleichgross, d.h. äquidistant sein. Ein erster Greifer kann an einem ersten Pipettier-Rohr so angeordnet werden, dass seine erste Horizontalachse mit der X-Richtung des Systems ausgerichtet ist und ein zweiter Greifer kann derart an einem zweiten Pipettier-Rohr angeordnet werden, dass seine erste Horizontalachse in der Gegenrichtung zur X-Richtung des Systems ausgerichtet ist. Die Saugnäpfe des ersten und des zweiten Greifers sind einander zugewandt. Die beiden Greifer können mittels einer Verschiebung der Pipettier-Rohre auseinandergefahren werden und können jeweils auf einer gegenüberliegenden Seite eines zu greifenden Laborartikels angeordnet werden. Die Greifer können anschliessend soweit zusammengefahren werden, bis die Ränder der Saugnäpfe mindestens an einer entsprechenden Seitenfläche anliegen. Wird dann der Unterdruck zu den Saugnäpfen geleitet, so saugen sich diese an der Oberfläche des Laborartikels fest. Ein schwerer Laborartikel kann so von zwei sich gegenüberliegenden Seiten sicher gehalten werden. Alternativ können die Greifer winklig zueinander ausgerichtet sein, wodurch es möglich ist einen Laborartikel von zueinander winklig ausgerichteten Seiten zu greifen. Beispielsweise können die Greifer rechtwinklig zueinander ausgerichtet sein. Jeder andere Winkel ist jedoch auch möglich.

In einer Ausführungsform umfasst das Pipettier-System einen Halter zur Aufnahme mindestens eines Greifers. Der Greifer ist derart ausgestaltet, dass die Kupplung des Greifers in der bestimmungsgemässen Gebrauchslage oben ist und ein Pipettier-Rohr von oben in der Z-Richtung in die Kupplung des Greifers einführbar ist. Eine Auflagefläche verhindert, dass der Greifer beim Einführen des Pipettier-Rohres nach unten weggedrückt wird. Ist der Greifer am Pipettier-Rohr fixiert, so kann er nach oben oder zu einer Seite hin aus dem Halter ausgefahren werden. Wird der Greifer nicht mehr benötigt, so kann er wieder im Halter abgeladen werden. Hierfür kann er wieder seitlich in den Halter eingefahren werden. Rückhalteelemente verhindern, dass der Greifer den Halter verlässt, wenn das Pipettier-Rohr nach oben in der Z-Richtung ausgefahren wird. Es können mehrere Halter, beispielsweise in der Y-Richtung nebeneinander angeordnet sein.

In einer Ausführungsform umfasst das Pipettier-Rohr einen Schaft mit einem zylindrischen ersten Abschnitt, einen konisch nach unten zusammenlaufenden zweiten Abschnitt und einen zylindrischen dritten Abschnitt, wobei der Durchmesser des dritten Abschnitts kleiner als der Durchmesser des ersten Abschnitts ist. Alternativ kann der Schaft einen zylindrischen und/oder einen konisch zusammenlaufenden Abschnitt umfassen. Es ist auch möglich, dass der Schaft mehrere zueinander abgestufte zylindrische Abschnitte umfasst.

In einer Ausführungsform ist im dritten Abschnitt des Schaftes eine umlaufende Nut vorgesehen, in welcher eine ringförmige zweite Dichtung angeordnet ist, deren äussere Kontur nach aussen über die Kontur des dritten Abschnitts ragt.

In einer Ausführungsform ist im ersten Abschnitt des Schaftes eine umlaufende Nut vorgesehen, in welcher eine ringförmige dritte Dichtung angeordnet ist, deren äussere Kontur nach aussen über die Kontur des ersten Abschnitts ragt.

In einer Ausführungsform ist im ersten Abschnitt des Schaftes eine umlaufende erste Erhöhung vorgesehen, deren äussere Kontur nach aussen über die Kontur des ersten Abschnitts ragt, wobei die äussere Kontur der ersten Erhöhung des Pipettier-Rohres innerhalb der Kontur der ersten Ausnehmung der Kupplung liegt. Die erste Erhöhung zentriert das Pipettier-Rohr in der ersten Ausnehmung. Die erste Erhöhung kann zusätzlich als Rückhalteelement in der Kombination mit der ersten Kraftscheibe dienen. Die Erhöhung kann kontinuierlich und/oder abgestuft ausgebildet sein.

In einer Ausführungsform ist im ersten Abschnitt des Schaftes eine umlaufende Nut vorgesehen, in welche das ringförmige, elastische Kupplungselement im zusammengebauten Zustand eingreift. Die Kontur der Nut im Querschnitt kann der Kontur des Kupplungselements entsprechen oder kann dieser angenähert sein, beispielsweise durch gerade Abschnitte. Um das Kupplungsverhalten verändern zu können, kann beispielsweise die Nut mit einer Anfasung oder mit einem Einlauf versehen sein. Je grösser die Anfasung oder der Einlauf, desto geringer sind die erforderlichen Trennkräfte bei der Entkupplung.

In einer Ausführungsform umfassend das Pipettier-System zwei oder mehr erfindungsgemässe Greifer, wobei mindestens zwei der Greifer gemeinsam einen Laborartikel von sich gegenüberliegenden Seiten oder von winklig zueinanderstehenden Seiten greifen können.

Die erwähnten Ausführungsformen des Pipettier-Systems lassen sich beliebig miteinander kombinieren, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Es zeigen
Fig. 1 eine perspektivische Ansicht eines erfindungsgemässen Greifers;
Fig. 2 eine schematische Schnittansicht des Kupplungsbereiches einer ersten Ausführungsform eines erfindungsgemässen Greifers;
Fig. 3 eine schematische Schnittansicht des Kupplungsbereiches einer zweiten Ausführungsform eines erfindungsgemässen Greifers; und
Fig. 4a-4d schematische Darstellungen von Anordnungen der Kupplung, des Fluidkanals und der Saugnäpfe eines erfindungsgemässen Greifers.

### DETAILLIERTE BESCHREIBUNG DER ERFINDUNG

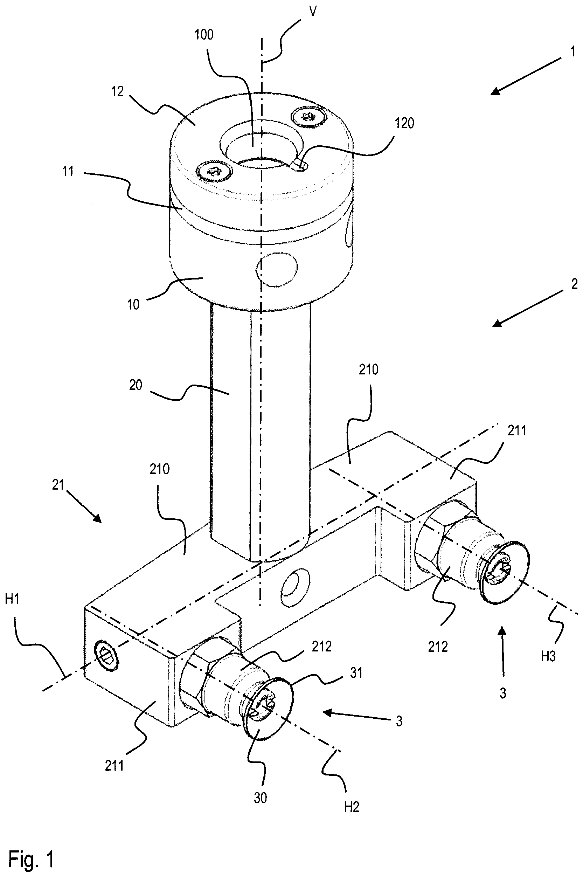

Die Figur 1 zeigt eine perspektivische Ansicht eines erfindungsgemässen Greifers. Diese Figur entspricht einer erfindungsgemässen Gebrauchslage. Der Greifer umfasst eine Kupplung 1, einen Fluidkanal 2, welcher sich von der Kupplung 1 an erstreckt und Saugnäpfe 3, die über den Fluidkanal 2 mit der Kupplung 1 derart verbunden sind, dass ein Unterdruck von der Kupplung 1 zu den Saugnäpfen 3 übertragbar ist. Die Kupplung 1 befindet sich demnach oben und die Saugnäpfe 3 unten. Die Kupplung 1 umfasst einen zylindrischen Körper 10 eine erste Kraftscheibe 11 und einen axialen Führungsring 12, wobei die erste Kraftscheibe 11 zwischen der oberen Stirnfläche des Körpers 10 und der unteren Stirnfläche des Führungsrings 12 klemmbar ist. In der dargestellten Ausführungsform werden Schrauben für die Erzeugung der Klemmwirkung verwendet. In der oberen Stirnfläche des Führungsrings 12 ist eine erste Ausnehmung 100 vorgesehen, welche sich vom Zentrum der oberen Stirnfläche des Führungsrings 12 in der Richtung einer Vertikalachse V nach unten erstreckt. In der oberen Stirnfläche des Führungsrings 12 ist eine zweite Ausnehmung 120 vorgesehen, welche sich von der ersten Ausnehmung an radial nach aussen über einen Teil der oberen Stirnfläche erstreckt. Der Fluidkanal 2 schliesst unterhalb an die Kupplung 1 an. Der Fluidkanal 2 umfasst einen vertikalen ersten Abschnitt 20 und einen horizontalen zweiten Abschnitt 21, wobei sich der erste Abschnitt 20 in der Richtung der Vertikalachse V erstreckt und sich der zweite Abschnitt in der Richtung einer ersten Horizontalachse H1 erstreckt. Die seitlichen Ausdehnungen entlang des Fluidkanals 2 sind geringer als die seitlichen Ausdehnungen der Kupplung 1. Der vertikale erste Abschnitt 20 mündet mittig in den horizontalen zweiten Abschnitt 21, wodurch eine Zweiteilung des Fluidkanals 2 erfolgt. Der zweite Abschnitt 21 umfasst einen inneren Abschnitt 210 und einen äusseren Abschnitt 211, wobei sich der innere Abschnitt in der Richtung der ersten Horizontalachse H1 erstreckt und wobei sich der äussere Abschnitt 211 in der Richtung einer zweiten Horizontalachse H2, bzw. in der Richtung einer dritten Horizontalachse H3 erstreckt. Die erste, zweite und dritte Horizontalachse H1, H2, H3 sind in einer gemeinsamen horizontalen Ebene angeordnet. Die erste Horizontalachse H1 steht senkrecht auf die zweite Horizontalachse H2 und senkrecht auf die dritte Horizontalachse H3. Die zweite Horizontalachse H2 ist parallel zur dritten Horizontalachs H3. Eine Durchgangsbohrung, welche sich entlang der ersten Horizontalachse H1 erstreckt, ist auf den Greifer bezogen seitlich durch einschraubbare Verschlusse abgedichtet. Der äussere Abschnitt 211 erstreckt sich auf den Greifer bezogen, vom inneren Abschnitt 210 aus nach vorne in der Richtung der zweiten Horizontalachse H2, bzw. in der Richtung der dritten Horizontalachse H3. An der vorderen Stirnfläche des äusseren Abschnitts 211 ist jeweils ein Saugnapf 3 mittels eines einschraubbaren Halters 212 angeordnet. Jeder Saugnapf 3 umfasst eine Saugglocke 30 mit einem geschlossenen umlaufenden Rand 31. Das Innere der Saugglocke 30 ist durch den Halter 212 mit dem Fluidkanal 2 derart verbunden, dass ein Unterdruck von der Kupplung zum jeweiligen Saugnapf 3 übertragbar ist.

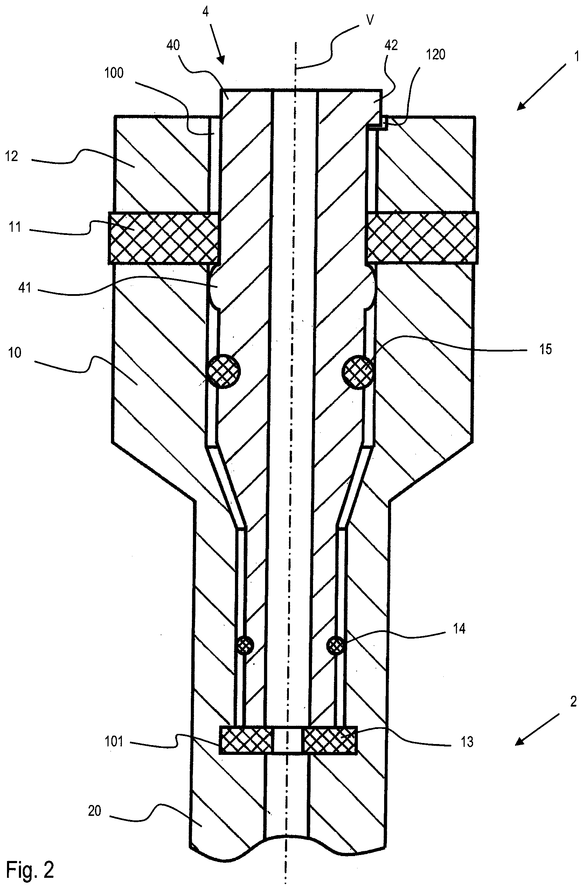

Die Figur 2 zeigt eine schematische Schnittansicht des Kupplungsbereiches einer ersten Ausführungsform eines erfindungsgemässen Greifers, welcher an einem Pipettier-Rohr 4 angeordnet ist. Die Kupplung 2 und der erste Abschnitt 20 des Fluidkanals 2 erstrecken sich entlang der Vertikalachse V. Ein Schaft 40 des Pipettier-Rohres 4 ist zentrisch in der ersten Ausnehmung 100 der Kupplung 1 angeordnet. Die erste Ausnehmung 100 und der Schaft 40 umfassen einen oberen, zylindrischen ersten Bereich, einen an diesen unterhalb anschliessenden und nach unten konisch zusammenlaufenden zweiten Bereich und einen an diesen unterhalb anschliessenden zylindrischen dritten Bereich.

Zwischen den Innenwänden der ersten Ausnehmung 100 und den Aussenwänden des Schaftes 40 ist ein Luftspalt vorgesehen. Am unteren Ende des dritten Bereiches der ersten Ausnehmung 100 ist eine umlaufende erste Nut 101 vorgesehen, in welcher eine ringscheibenförmige erste Dichtung 13 angeordnet ist. Der Schaft 40 schlägt mit seiner unteren Stirnfläche an der oberen Stirnfläche der ersten Dichtung 13 an. Im dritten Bereich des Schaftes 40 ist eine umlaufende Nut vorgesehen, in welcher eine ringförmige zweite Dichtung 14 angeordnet ist. Im ersten Bereich des Schaftes 40 ist eine umlaufende Nut vorgesehen, in welcher eine ringförmige dritte Dichtung 15 angeordnet ist. Die zweite Dichtung 14 und die dritte Dichtung 15 verschliessen den Luftspalt zwischen dem Greifer und dem Pipettier-Rohr 4. Zusätzlich ist durch sie eine Zentrierung, eine Dichtwirkung und eine Fixierung realisierbar. Der Querschnittsdurchmesser der dritten Dichtung 15 ist grösser als derjenige der zweiten Dichtung 14. Im ersten Bereich des Schaftes 40 ist eine umlaufende erste Erhöhung 41 vorgesehen, welche radial über den Umfang des zylinderförmigen ersten Bereichs ragt. Die radiale Aussenkontur der ersten Erhöhung 41 ist kleiner als der Innendurchmesser der ersten Ausnehmung 100. Die erste Kraftscheibe 11 hat die Form einer Ringscheibe, deren Innendurchmesser im verspannten Zustand kleiner ist als der Innendurchmesser der ersten Ausnehmung 100. Im zusammengebauten Zustand kann die Innenseite der ersten Kraftscheibe 11 die Aussenseite des ersten Bereiches des Pipettier-Rohres 4 kontaktieren, woraus eine Zentrierung, Dichtung und Fixierung erzielbar ist. Die erste Kraftscheibe 11 ist im Zusammenbau anschliessend oberhalb der ersten Erhöhung 41 angeordnet und bildet ein Rückhalteelement für den Greifer. Durch diese Ausgestaltung ist der Greifer mit einem vernünftigen Kraftaufwand vom Pipettier-Rohr 4 entfernbar. Im ersten Schaftbereich des Pipettier-Rohres 4 eine sich radial nach aussen erstreckende zweite Erhöhung 42 vorgesehen, welche im Zusammenbau in die zweite Ausnehmung 120 der Kupplung 1 eingreifen kann, wodurch eine Relativrotation zwischen dem Greifer und dem Pipettier-Rohr verhinderbar ist.

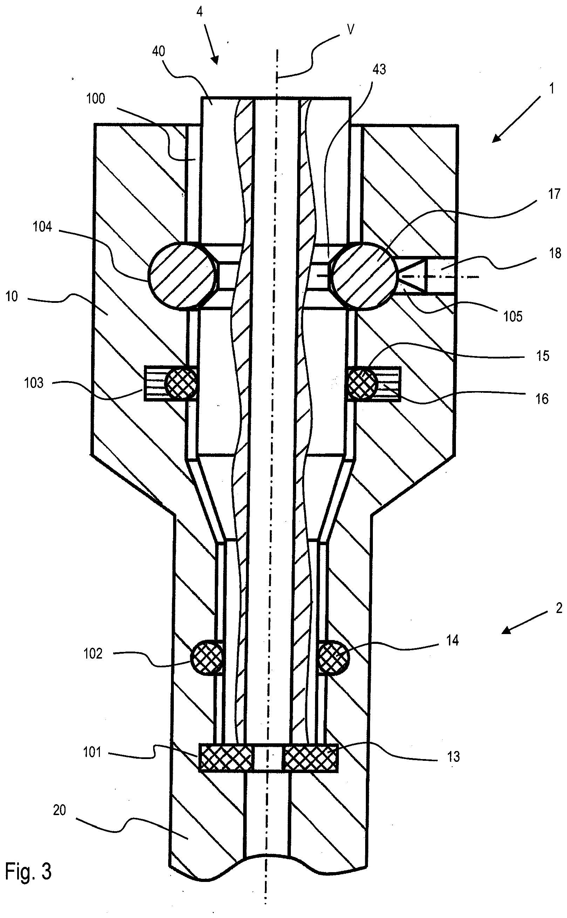

Die Figur 3 zeigt eine schematische Schnittansicht des Kupplungsbereiches einer zweiten Ausführungsform eines erfindungsgemässen Greifers, welcher an einem Pipettier-Rohr 4 angeordnet ist. Im Unterschied zur ersten Ausführungsform ist bei dieser Ausführungsform im dritten Bereich der ersten Ausnehmung 100 eine umlaufende zweite Nut 102 vorgesehen, in welcher eine ringförmige zweite Dichtung 14 angeordnet ist. Im ersten Bereich der ersten Bohrung 100 ist eine umlaufende dritte Nut 103 vorgesehen, in welcher eine dritte Dichtung 15 und eine zweite Kraftscheibe 16 angeordnet sind, wobei die Kraftscheibe 16 eine radial nach innen gerichtete Kraftkomponente auf die dritte Dichtung 15 ausüben kann. Die zweite Dichtung 14 und die dritte Dichtung 15 verschliessen den Luftspalt zwischen dem Greifer und dem Pipettier-Rohr 4. Im ersten Bereich der ersten Ausnehmung 100 ist eine umlaufende vierte Nut 104 vorgesehen, in welcher ein torusförmiges Kupplungselement 17 angeordnet ist. Der Innendurchmesser des Kupplungselements 17 ragt in den Durchmesser der ersten Ausnehmung 100. Im ersten Bereich des Schaftes 40 ist eine umlaufende Nut 43 vorgesehen, in welche das Kupplungselement 17 im zusammengebauten Zustand eingreifen kann. Durch diese Ausgestaltung ist der Greifer mit einem vernünftigen Kraftaufwand vom Pipettier-Rohr 4 entfernbar. Im Bereich der vierten Nut 104 ist im Körper 10 der Kupplung 1 eine sich nach aussen erstreckende radiale Bohrung 105 vorgesehen, in welcher ein Drücker 18 angeordnet ist. Mit dem Drücker 18 kann eine radial nach innen gerichtet Kraft auf das Kupplungselement 17 ausgeübt werden, wodurch die Klemmkraft des Kupplungselements 17 einstellbar ist.

Selbstverständlich lassen sich die Elemente der ersten Ausführungsform mit denjenigen der zweiten Ausführungsform kombinieren.

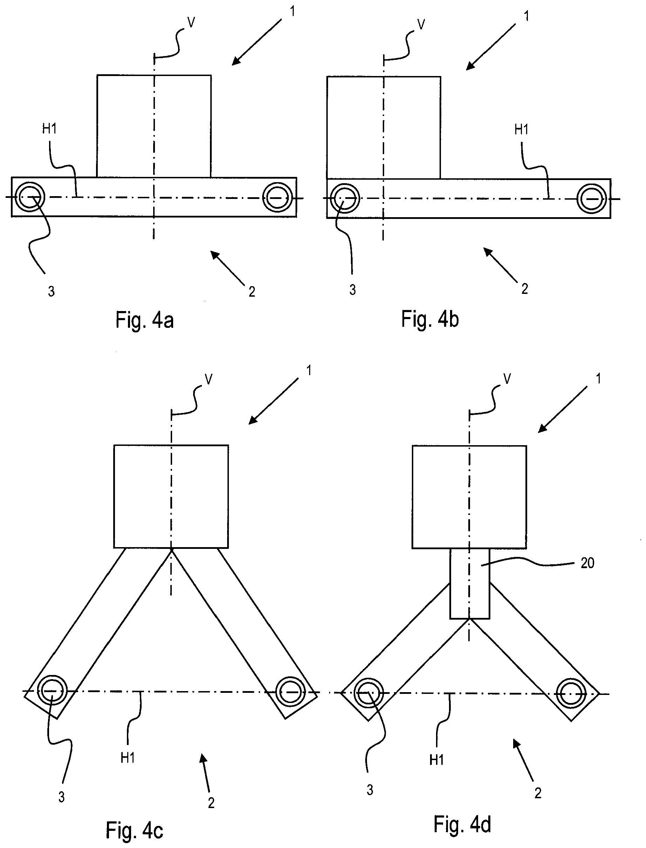

Die Figuren 4a bis 4d zeigen schematische Darstellungen von Anordnungen der Kupplung 1, des Fluidkanals 2 und der Saugnäpfe 3 eines erfindungsgemässen Greifers. Die Figur 4a zeigt eine Ausführungsform, bei welcher der Fluidkanal 2 nur horizontale Abschnitte umfasst und die Saugnäpfe 3 seitlich symmetrisch bezüglich der Vertikalachs V angeordnet sind.

Die Figur 4b zeigt eine entsprechende asymmetrische Anordnung der Saugnäpfe 3 bezüglich der Vertikalachse V.

Die Figur 4c zeigt einen Greifer mit zwei Fluidkanälen 2, welche geneigt bezüglich der Vertikalachse verlaufen, wobei die am jeweiligen Ende des Fluidkanals 2 angeordneten Saugnäpfe 3 in einer gemeinsamen Horizontalebene angeordnet sind, welche die erste Horizontalachse H1 umfasst.

Die Figur 4d zeigt einen Greifer mit einem Fluidkanal 2 mit einem ersten vertikalen Abschnitt 20 und zwei an diesen anschliessenden geneigten Abschnitten.

**BEZUGSZEICHENLISTE**

| | | | |
|---|---|---|---|
| 1 | Kupplung | 21 | zweiter Abschnitt |
| 10 | Körper | 210 | innerer Abschnitt |
| 100 | erste Ausnehmung | 211 | äusserer Abschnitt |
| 101 | erste Nut | 212 | Halter |
| 102 | zweite Nut | 3 | Saugnapf |
| 103 | dritte Nut | 30 | Saugglocke |
| 104 | vierte Nut | 31 | Rand |
| 105 | radiale Bohrung | 4 | Pipettier-Rohr |
| 11 | erste Kraftscheibe | 40 | Schaft |
| 12 | axialer Führungsring | 41 | erste Erhöhung |
| 120 | zweite Ausnehmung | 42 | zweite Erhöhung |
| 13 | erste Dichtung | 43 | Nut |
| 14 | zweite Dichtung | V | Vertikalachse |
| 15 | dritte Dichtung | H1 | erste Horizontalachse |
| 16 | zweite Kraftscheibe | H2 | zweite Horizontalachse |
| 17 | Kupplungselement | | |
| 18 | Drücker | H3 | dritte Horizontalachse |
| 2 | Fluidkanal | | |
| 20 | erster Abschnitt | | |

## Patentansprüche

1. Ein Greifer umfassend
- eine mechanische Kupplung (1), mit welcher der Greifer an ein Pipettier-Rohr (4) anschliessbar ist,
- mindestens einen Fluidkanal (2), welcher sich von der der Kupplung (1) aus erstreckt und mit welchem ein Unterdruck übertragbar ist,
wobei der Greifer mindestens einen Saugnapf (3) umfasst, welcher durch den mindestens einen Fluidkanal (2) mit der Kupplung (1) verbunden ist, wodurch der Unterdruck von der Kupplung (1) zum mindestens einen Saugnapf (3) übertragbar ist,
**dadurch gekennzeichnet, dass** der mindestens eine Saugnapf (3) derart ausgerichtet ist, dass ein Rand (31) einer Saugglocke (30) des mindestens einen Saugnapfes (3), in der bestimmungsgemässen Gebrauchslage des Greifers, in einer im Wesentlichen vertikalen Ebene ausgerichtet ist.

2. Der Greifer gemäss Anspruch 1, wobei der Fluidkanal (2) mindestens einen ersten Abschnitt (20) umfasst, welcher sich in der bestimmungsgemässen Gebrauchslage des Greifers, in einer im Wesentlichen vertikalen Ebene (V, H1) erstreckt.

3. Der Greifer gemäss Anspruch 2, wobei der mindestens eine erste Abschnitt (20) sich im Wesentlichen in der Richtung einer Vertikalachse (V) erstreckt und/oder wobei sich der mindestens eine erste Abschnitt (20) geneigt bezüglich der Vertikalachse (V) erstreckt.

4. Der Greifer gemäss einem der vorangehenden Ansprüche, wobei der Fluidkanal (2) mindestens einen zweiten Abschnitt (21) umfasst, welcher sich in der bestimmungsgemässen Gebrauchslage des Greifers, in einer im Wesentlichen horizontalen Ebene (H1, H2, H3) erstreckt.

5. Der Greifer gemäss Anspruch 4, wobei der zweite Abschnitt (21) einen inneren Abschnitt (210) umfasst, welcher sich im Wesentlichen in einer ersten horizontalen Richtung (H1) erstreckt und einen äusseren Abschnitt (211) umfasst, welcher sich im Wesentlichen in einer zweiten horizontalen Richtung (H2) erstreckt.

6. Der Greifer gemäss einem der vorangehenden Ansprüche, wobei die Abschnitte (20, 21) des Fluidkanals (2) gerade oder gekrümmt ausgebildet sind.

7. Der Greifer gemäss einem der vorangehenden Ansprüche, wobei der Greifer zwei oder mehr Saugnäpfe (3) umfasst, wobei mindestens zwei der Saugnäpfe (3) in einer gemeinsamen horizontalen Ebene (H1, H2, H3) angeordnet sind.

8. Der Greifer gemäss einem der vorangehenden Ansprüche, wobei in der oberen stirnseitigen Fläche der Kupplung (1) eine erste Ausnehmung (100) vorgesehen ist, welche sich entlang der vertikalen Achse (V) erstreckt und in welcher das Pipettier-Rohr (4) aufnehmbar und fixierbar ist.

9. Der Greifer gemäss Anspruch 8, wobei am oberen freien Ende der Kupplung (1) eine erste Kraftscheibe (11) zwischen dem Körper (10) und einem axialen Führungsring (12) klemmbar angeordnet ist, wobei die innere Kontur der ersten Kraftscheibe (11) im geklemmten Zustand in das Innere der Kontur der ersten Ausnehmung (100) ragt.

10. Der Greifer gemäss Anspruch 8, wobei am oberen freien Ende der Kupplung (1) mindestens eine zweite Ausnehmung (120) vorgesehen ist, welche sich von der ersten Ausnehmung (100) radial nach aussen erstreckt und in welcher eine zweite Erhöhung (42) des Pipettier-Rohres (4) aufnehmbar ist, wodurch eine relative Verdrehung des Greifers (1) bezüglich des Pipettier-Rohres (4) verhindert werden kann.

11. Der Greifer gemäss einem der Ansprüche 8 bis 10, wobei am unteren Ende des dritten Abschnitts der ersten Ausnehmung (100) eine umlaufende erste Nut (101) vorgesehen ist, in welcher eine ringscheiben-förmige erste Dichtung (13) angeordnet ist, deren innere Kontur in das Innere der Kontur des dritten Abschnitts ragt.

12. Der Greifer gemäss einem der Ansprüche 8 bis 11, wobei im dritten Abschnitt der ersten Ausnehmung (100) eine umlaufende zweite Nut (102) vorgesehen ist, in welcher eine ringförmige zweite Dichtung (14) angeordnet ist, deren innere Kontur in das Innere der Kontur des dritten Abschnitts ragt.

13. Der Greifer gemäss einem der Ansprüche 8 bis 12, wobei im ersten Abschnitt der ersten Ausnehmung (100) eine umlaufende dritte Nut (103) vorgesehen ist, in welcher eine ringförmige dritte Dichtung (15) oder
in welcher eine ringförmige dritte Dichtung (15) und eine zweite Kraftscheibe (16) angeordnet sind, wobei die innere Kontur der dritten Dichtung (15) in das Innere der Kontur des ersten Abschnitts ragt.

14. Der Greifer gemäss einem der Ansprüche 8 bis 13, wobei im ersten Abschnitt der ersten Ausnehmung (100) eine umlaufende vierte Nut (104) vorgesehen ist, in welcher ein ringförmiges, elastisches Kupplungselement (17) angeordnet ist, dessen innere Kontur in das Innere der Kontur des ersten Abschnitts ragt.

15. Der Greifer gemäss Anspruch 14, wobei in der Kupplung (1) mindestens eine radiale Bohrung (105) vorgesehen ist, welche sich von der vierten Nut (104) radial nach aussen erstreckt und in welcher ein Drücker (18) angeordnet ist, mit welchem eine radial nach innen gerichtete Kraft auf das Kupplungselement (17) ausübbar ist.

16. Ein Pipettier-System umfassend:
- eine Pipettier-Vorrichtung mit einer Unterdruckquelle und mit mindestens einem Pipettier-Rohr (4), welches mit der Unterdruckquelle verbundenen ist,
**dadurch gekennzeichnet, dass** das Pipettier-System weiter mindestens einen Greifer gemäss einem der vorangehenden Ansprüche umfasst, welcher mit der Kupplung (1) am Pipettier-Rohr (4) fixiert werden kann.

17. Das Pipettier-System gemäss Anspruch 16, wobei im ersten Abschnitt des Schaftes (40) eine umlaufende erste Erhöhung (41) vorgesehen ist, deren äussere Kontur nach aussen über die Kontur des ersten Abschnitts ragt, wobei die äussere Kontur der ersten Erhöhung (41) des Pipettier-Rohres (4) innerhalb der Kontur der ersten Ausnehmung (100) der Kupplung (1) liegt.

18. Das Pipettier-System gemäss Anspruch 16, wobei im ersten Abschnitt des Schaftes (40) eine umlaufende Nut (43) vorgesehen ist, in welche das ringförmige, elastische Kupplungselement (17) im zusammengebauten Zustand eingreift.

19. Das Pipettier-System gemäss einem der Ansprüche 16 bis 18, umfassend zwei oder mehr Greifer gemäss einem der Ansprüche 1-15, wobei mindestens zwei der Greifer gemeinsam einen Laborartikel von sich gegenüberliegenden Seiten oder von winklig zueinanderstehenden Seiten greifen können.

## Claims

1. A gripper, comprising:
- a mechanical coupling (1) with which the gripper is connectable to a pipetting tube (4),
- at least one fluid channel (2) which extends from the coupling (1) and with which a negative pressure can be transmitted,
wherein the gripper comprises at least one suction cup (3) which is connected to the coupling (1) through the at least one fluid channel (2), whereby the negative pressure can be transmitted from the coupling (1) to the at least one suction cup (3),
**characterized in that** the at least one suction cup (3) is aligned in such a way that a rim (31) of a suction bell (30) of the at least one suction cup (3), in the intended position of use of the gripper, is aligned in a substantially vertical plane.

2. The gripper according to claim 1, wherein the fluid channel (2) comprises at least one first section (20) which, in the intended position of use of the gripper, extends in a substantially vertical plane (V, H1).

3. The gripper according to claim 2, wherein the at least one first section (20) extends substantially in the direction of a vertical axis (V) and/or wherein the at least one first section (20) extends inclined with respect to the vertical axis (V).

4. The gripper according to one of the preceding claims, wherein the fluid channel (2) comprises at least one second section (21) which, in the intended position of use of the gripper, extends in a substantially horizontal plane (H1, H2, H3).

5. The gripper according to claim 4, wherein the second section (21) comprises an inner section (210) extending substantially in a first horizontal direction (H1) and an outer section (211) extending substantially in a second horizontal direction (H2).

6. The gripper according to one of the preceding claims, wherein the sections (20, 21) of the fluid channel (2) are formed in a straight or curved manner.

7. The gripper according to one of the preceding claims, wherein the gripper comprises two or more suction cups (3), wherein at least two of the suction cups (3) are arranged in a common horizontal plane (H1, H2, H3).

8. The gripper according to one of the preceding claims, wherein in the upper front face of the coupling (1) a first recess (100) is provided, which extends along the vertical axis (V) and in which the pipetting tube (4) can be received and fixed.

9. The gripper according to claim 8, wherein a first force plate (11) is arranged in a clampable manner at the upper free end of the coupling (1) between the body (10) and an axial guide ring (12), wherein the inner contour of the first force plate (11) projects in the clamped state into the interior of the contour of the first recess (100).

10. The gripper according to claim 8, wherein at the upper free end of the coupling (1) at least one second recess (120) is provided, which extends radially outwards from the first recess (100) and in which a second elevation (42) of the pipetting tube (4) is receivable, whereby a relative rotation of the gripper (1) with respect to the pipetting tube (4) can be prevented.

11. The gripper according to one of claims 8 to 10, wherein at the lower end of the third section of the first recess (100) a circumferential first groove (101) is provided, in which a circular disc-shaped first seal (13) is arranged, the inner contour of which projects into the interior of the contour of the third section.

12. The gripper according to one of claims 8 to 11, wherein in the third section of the first recess (100) a circumferential second groove (102) is provided, in which an annular second seal (14) is arranged, the inner contour of which projects into the interior of the contour of the third section.

13. The gripper according to one of claims 8 to 12, wherein in the first section of the first recess (100) a circumferential third groove (103) is provided, in which an annular third seal (15) is arranged or in which an annular third seal (15) and a second force plate (16) are arranged, wherein the inner contour of the third seal (15) projects into the interior of the contour of the first section.

14. The gripper according to one of claims 8 to 13, wherein in the first section of the first recess (100) a circumferential fourth groove (104) is provided, in which an annular, elastic coupling element (17) is arranged, the inner contour of which projects into the interior of the contour of the first section.

15. The gripper according to claim 14, wherein in the coupling (1) at least one radial bore (105) is provided, which extends radially outwards from the fourth groove (104) and in which a pusher (18) is arranged, with which a radially inwardly directed force can be exerted on the coupling element (17).

16. A pipetting system, comprising:
- a pipetting device having a negative pressure source and having at least one pipetting tube (4) which is connected to the negative pressure source,
**characterized in that** the pipetting system further comprises at least one gripper according to one of the preceding claims, which can be fixed to the pipetting tube (4) by means of the coupling (1).

17. The pipetting system according to claim 16, wherein in the first section of the shaft (40) a circumferential first elevation (41) is provided, the outer contour of which projects outwardly beyond the contour of the first section, wherein the outer contour of the first elevation (41) of the pipetting tube (4) lies within the contour of the first recess (100) of the coupling (1).

18. The pipetting system according to claim 16, wherein in the first section of the shaft (40) a circumferential groove (43) is provided, in which the annular, elastic coupling element (17) engages in the assembled state.

19. The pipetting system according to one of claims 16 to 18, comprising two or more grippers according to one of claims 1 to 15, wherein at least two of the grippers can jointly grip a laboratory article from opposite sides or from sides disposed at an angle to each other.

## Revendications

1. Dispositif de préhension comprenant
- un accouplement mécanique (1) qui permet de relier le dispositif de préhension à un tube de pipetage (4),
- au moins un canal fluidique (2) qui s'étend à partir de l'accouplement (1) et qui permet de transférer une dépression,
le dispositif de préhension comprenant au moins une ventouse (3) qui est reliée à l'accouplement (1) par l'intermédiaire du au moins un canal fluidique (2), grâce à quoi la dépression peut être transférée depuis l'accouplement (1) à au moins une ventouse (3),
**caractérisé en ce que** la au moins une ventouse (3) est orientée de telle manière qu'un bord (31) d'une cloche d'aspiration (30) de la au moins une ventouse (3), dans la position d'utilisation conforme à l'usage prévu du dispositif de préhension, est orienté dans un plan sensiblement vertical.

2. Dispositif de préhension selon la revendication 1, dans lequel le canal fluidique (2) comprend au moins une première section (20) qui s'étend, dans la position d'utilisation conforme à l'usage prévu du dispositif de préhension, dans un plan sensiblement vertical (V, H1).

3. Dispositif de préhension selon la revendication 2, dans lequel la au moins une première section (20) s'étend essentiellement dans le sens d'un axe vertical (V) et/ou dans lequel la au moins une première section (20) s'étend inclinée par rapport à l'axe vertical (V).

4. Dispositif de préhension selon l'une des revendications précédentes, dans lequel le canal fluidique (2) comprend au moins une deuxième section (21) qui s'étend, dans la position d'utilisation conforme à l'usage prévu du dispositif de préhension, dans un plan sensiblement horizontal (H1, H2, H3).

5. Dispositif de préhension selon la revendication 4, dans lequel la deuxième section (21) comprend une section intérieure (210) qui s'étend essentiellement dans une première direction horizontale (H1) et une section extérieure (211) qui s'étend essentiellement dans une deuxième direction horizontale (H2).

6. Dispositif de préhension selon l'une des revendications précédentes, dans lequel les sections (20, 21) du canal fluidique (2) sont réalisées droites ou courbées.

7. Dispositif de préhension selon l'une des revendications précédentes, le dispositif de préhension comprenant deux ventouses (3) ou plus, au mois deux des ventouses (3) étant agencées dans un plan horizontal commun (H1, H2, H3).

8. Dispositif de préhension selon l'une des revendications précédentes, dans lequel il est prévu sur la surface frontale supérieure de l'accouplement (1) un premier évidement (100) qui s'étend le long de l'axe vertical (V) et dans lequel on peut loger et fixer le tube de pipetage (4).

9. Dispositif de préhension selon la revendication 8, dans lequel il est agencé de façon à pouvoir être serré, au niveau de l'extrémité libre supérieure de l'accouplement (1), un premier disque de force (11) entre le corps (10) et une bague de guidage axiale (12), le contour intérieur du premier disque de force (11), à l'état serré, faisant saillie dans l'intérieur du contour du premier évidement (100).

10. Dispositif de préhension selon la revendication 8, dans lequel il est prévu au niveau de l'extrémité libre supérieure de l'accouplement (1) un deuxième évidement (120) qui s'étend radialement vers l'extérieur depuis le premier évidement (100) et dans lequel on peut loger une deuxième élévation (42) du tube de pipetage (4), ce qui permet d'empêcher une torsion relative du dispositif de préhension (1) par rapport au tube de pipetage (4).

11. Dispositif de préhension selon l'une des revendications 8 à 10, dans lequel il est prévu, au niveau de l'extrémité inférieure de la troisième section du premier évidement (100), une première rainure périphérique (101), dans laquelle est agencé un premier joint d'étanchéité (13) en forme de rondelle dont le contour intérieur fait saille dans l'intérieur du contour de la troisième section.

12. Dispositif de préhension selon l'une des revendications 8 à 11, dans lequel il est prévu dans la troisième section du premier évidement (100) une deuxième rainure périphérique (102), dans laquelle est agencé un deuxième joint d'étanchéité annulaire (14) dont le contour intérieur fait saillie dans l'intérieur du contour de la troisième section.

13. Dispositif de préhension selon l'une des revendications 8 à 12, dans lequel il est prévu dans la première section du premier évidement (100) une troisième rainure périphérique (103), dans laquelle sont agencés un troisième joint d'étanchéité annulaire (15) ou bien un troisième joint d'étanchéité annulaire (15) et un deuxième disque de force (16), le contour intérieur du troisième joint d'étanchéité (15) faisant saillie dans l'intérieur du contour de la première section.

14. Dispositif de préhension selon l'une des revendications 8 à 13, dans lequel il est prévu dans la première section du premier évidement (100) une quatrième rainure périphérique (104), dans laquelle est agencé un élément d'accouplement (17) élastique annulaire dont le contour intérieur fait saillie dans l'intérieur du contour de la première section.

15. Dispositif de préhension selon la revendication 14, dans lequel il est prévu dans l'accouplement (1) au moins un alésage radial (105) qui s'étend radialement vers l'extérieur depuis la quatrième rainure (104) et dans lequel est agencé un poussoir (18) et qui permet d'exercer une force dirigée radialement vers l'intérieur sur l'élément d'accouplement (17).

16. Système de pipetage comprenant :
- un dispositif de pipetage avec une source de pression négative et avec au moins un tube de pipetage (4) qui est relié à la source de pression négative, **caractérisé en ce que** le système de pipetage comprend en outre au moins un dispositif de préhension selon l'une des revendications précédentes, lequel peut être fixé avec l'accouplement (1) au tube de pipetage (4).

17. Système de pipetage selon la revendication 16, dans lequel il est prévu dans la première section de l'arbre (40) une première élévation périphérique (41) dont le contour extérieur fait saillie vers l'extérieur au-dessus du contour de la première section, le contour extérieur de la première élévation (41) du tube de pipetage (4) étant à l'intérieur du contour du premier évidement (100) de l'accouplement (1).

18. Système de pipetage selon la revendication 16, dans lequel il est prévu dans la première section de l'arbre (40) une rainure périphérique (43) dans laquelle l'élément d'accouplement élastique annulaire (17) vient s'engager à l'état monté.

19. Système de pipetage selon l'une des revendications 16 à 18, comprenant deux dispositifs de préhension ou plus selon l'une des revendications 1 à 15, au moins deux des dispositifs de préhension pouvant saisir ensemble un article de laboratoire par les côtés opposés ou par les côtés formant un angle droit entre eux.
